# EUROPEAN PATENT APPLICATION

(11) **EP 3 306 992 A1**
(43) Date of publication of application: **11.04.2018**
(21) Application number: 16192748.8
(22) Date of filing: 07.10.2016
(51) Int. Cl.: H04W 64/00

(54) **POSITION DETECTION OF USER EQUIPMENT WITHIN A WIRELESS TELECOMMUNICATION NETWORK**

(71) Applicant: Nokia Technologies Oy, 02610 Espoo (FI)
(72) Inventor: XIONG, Zhilan, Bristol, BS32 4UF (GB); YE, Sigen, Murray Hill, NJ New Jersey 07974-0636 (US); BAKER, Matthew, Cambridge, Cambridgeshire CB24 6DD (GB)
(74) Representative: Script IP Limited

(57) **Abstract**

Techniques for position detection of user equipment within a wireless telecommunication network are disclosed. A user equipment method comprises: determining a signal reception parameter of a positioning signal transmitted by a transmission node of a wireless telecommunications network and position information from the positioning signal; and transmitting an indication of the signal reception parameter and an indication of the position information over an interface between the user equipment and a network entity. In this way, a reception parameter or characteristic of the positioning signal can be provided to the same network entity over the interface also used to provide the indication of the position information. This enables the network entity to make an assessment of the positioning signal received by the user equipment (for example, whether that signal is good or poor) so that the appropriate weight can be attached to the positioning information derived from that positioning signal provided by the user equipment which provides to increased accuracy when determining the location of the user equipment.

## Description

### FIELD OF THE INVENTION

The field of the invention relates to the position detection of user equipment within a wireless telecommunication network.

### BACKGROUND

Observed time difference of arrival (OTDOA) is a downlink positioning method used in networks for detecting a user equipment's position. In particular, network nodes transmit position reference signals (PRSs) and these are detected by user equipment (UE). The time of arrival (ToA) of the different PRSs at the user equipment from the network nodes is determined. A reference signal time difference measurement (RSTD) is made at the user equipment based on the ToA of the different PRSs at the user equipment, from which the UE's location can then be derived.

It is desirable to be able to increase the accuracy of positional measurement for user equipment.

### SUMMARY

According to a first aspect, there is provided a user equipment method, comprising: determining a signal reception parameter of a positioning signal transmitted by a transmission node of a wireless telecommunications network and position information from the positioning signal; and transmitting an indication of the signal reception parameter and an indication of the position information over an interface between the user equipment and a network entity.

The first aspect recognises that in the existing LTE/ LTE-A specifications, RSRP (Reference Signal Received Power) /RSRQ (Reference Signal Received Quality) are measured based on CRS (Cell-specific Reference Signal) or CSI-RS (Channel State Information Reference Signal) information. Signal strength/ quality measurements on cell-specific reference signal/channel state information-reference signal (CRS/CSI-RS) are configured by a base station (eNB), for purposes such as cell selection. Time of arrival measurements using the PRS (Positioning Reference Signal) are instead configured by a location server (E-SMLC) for positioning purposes. However the PRS (Positioning Reference Signal)-based beacon only transmit PRS, and do not transmit the CRS/CSI-RS that are conventionally also transmitted by eNBs and so PRS-based beacons do not have CRS and CSI-RS. So no RSRP/RSRQ measurement can be obtained at the UE based on PRS-based beacon. The first aspect also recognises that signal strength and/or signal quality measurements may nonetheless be useful for positioning purposes, for example to help a location server to identify the best transmission points to be used by a UE for time of arrival measurements. Therefore it maybe advantageous for the location server to configure both signal strength/ quality measurements and time of arrival measurements, and for those measurements to be reported directly back to the location server.

Accordingly, a method performed by a user equipment is provided. The method may comprise determining or measuring a parameter or characteristic of a received positioning signal which is transmitted by a transmission node of a wireless telecommunications network. The method may comprise determining, measuring or calculating positioning information from the positioning signal. The method may also comprise transmitting an indication of the signal reception parameter over an interface between the user equipment and a network entity. The method may also comprise transmitting an indication of the position information over the interface between the user equipment and the network entity. In this way, a reception parameter or characteristic of the positioning signal can be provided to the same network entity over the interface also used to provide the indication of the position information. This enables the network entity to make an assessment of the positioning signal received by the user equipment (for example, whether that signal is good or poor) so that the appropriate weight can be attached to the positioning information derived from that positioning signal provided by the user equipment which provides to increased accuracy when determining the location of the user equipment.

In one embodiment, the signal reception parameter comprises at least one of received power and a received quality of the positioning signal

In one embodiment, the position information indicates a position of the user equipment. Accordingly, a position of the user equipment maybe derived from the position information.

In one embodiment, the position information comprises an indication of a time of arrival of the positioning signal. It will be appreciated that the time of arrival may be a differential time determined with respect to a reference signal.

In one embodiment, the determining occurs in response to a request from the network entity. Accordingly, the user equipment may be instructed by the network entity to determine the signal reception parameters and/or the position information from the positioning signal.

In one embodiment, the request identifies transmission nodes for which at least one of the signal reception parameter and the position information is to be determined. Accordingly, the request may identify the transmission nodes or positioning signals from which the signal reception parameter and/or position information is to be determined.

In one embodiment, the request comprises at least one parameter of the positioning signal (e.g. (virtual) cell/beacon ID, PRS ID, cyclic prefix length, PRS subframe configuration, PRS subframe muting pattern, PRS bandwidth, etc.).

In one embodiment, the request is transmitted over the interface from said network entity to the user equipment.

In one embodiment, the determining comprises determining the signal reception parameter of the positioning signal together with determining the position information from the positioning signal. Accordingly, both the signal reception parameter and the positioning signal may be determined from the same positioning signal.

In one embodiment, the method comprises switching between determining the signal reception parameter of the positioning signal and determining the position information from the positioning signal in response to the request from the network entity. Accordingly, the user equipment may alter whether it is determining the signal reception parameter or the positioning signal, or both.

In one embodiment, the method comprises determining the signal reception parameter of the positioning signal prior to determining the position information. Accordingly, the user equipment may determine the signal reception parameter before determining the position information.

In one embodiment, the method comprises transmitting the indication of the signal reception parameter prior to determining the positioning signal. Accordingly, the user equipment may transmit the indication of the signal reception parameter before determining the positioning signal.

In one embodiment, the transmitting comprises transmitting both the indication of the signal reception parameter and the indication of the position information over the same interface between the user equipment and the network entity. Accordingly, the indication of the signal reception parameter and the indication of the position information maybe transmitted together using a common interface between the user equipment and the network entity.

In one embodiment, at least one of the request and each the indication are transmitted over a positioning protocol interface between the user equipment and the network entity. Accordingly, the positioning protocol interface may be used to transmit both the request and each indication.

In one embodiment, the transmitting transmits the indication of the signal reception parameter and the indication of the position information one of together and separately. Accordingly, the signal reception parameter and the position information maybe transmitted within the same or different messages.

In one embodiment, the determining the signal reception parameter comprises determining the signal reception parameter for each of a first plurality of positioning signals transmitted by a corresponding first plurality of transmission nodes. Accordingly, the signal reception parameter for every of a plurality of positioning signals may be determined. In other words, the signal reception parameter for each of a number of different positioning signals may be determined.

In one embodiment, the determining the signal reception parameter comprises determining the signal reception parameter for each of the first plurality of positioning signals transmitted by the corresponding first plurality of transmission nodes specified by the network entity.

In one embodiment, the transmitting the indication of the signal reception parameter comprises transmitting the indication of the signal reception parameter for each of the first plurality of positioning signals. Accordingly, each of those signal reception parameters for the different positioning signals may be transmitted to the network entity.

In one embodiment, the transmitting the indication of the signal reception parameter comprises transmitting the indication of the signal reception parameter for each of the first plurality of positioning signals which exceed a threshold amount of signal reception parameter. Accordingly, only those signal reception parameters which exceed a threshold, and so are considered to be particularly useful for positioning, may be transmitted to the network entity.

In one embodiment, the indication of the signal reception parameter comprises an indication of the transmission node. Accordingly, an indication of the transmission node that transmitted a suitably accurate positioning signal may be transmitted to the network entity. This provides the network entity with a list of those transmission nodes which are providing suitable positioning signals to the user equipment.

In one embodiment, the indication of each the reception parameter comprises an indication of the corresponding transmission node.

In one embodiment, the determining the position information comprises determining the position information for each of a second plurality of positioning signals transmitted by a corresponding second plurality of transmission nodes. Accordingly, the user equipment may determine position information from a different plurality of positioning signals.

In one embodiment, the first plurality and the second plurality are one of the same and different. Accordingly, the user equipment may determine the signal reception parameters of a first set of transmission nodes and then the positioning information from a second set of transmission nodes.

In one embodiment, the request includes only the identity of the transmission node.

In one embodiment, the second plurality are a subset of the first plurality.

In one embodiment, the first plurality are a subset of the second plurality.

In one embodiment, the network entity comprises a location server.

In one embodiment, the transmission node comprises at least one of a base station and a beacon.

In one embodiment, the determining comprises determining the signal reception parameter of the positioning signal transmitted by transmission nodes having a beacon identifier.

According to a second aspect, there is provided a user equipment, comprising: determining logic operable to determine a signal reception parameter of a positioning signal transmitted by a transmission node of a wireless telecommunications network and position information from the positioning signal; and transmission logic operable to transmit an indication of the signal reception parameter and an indication of the position information over an interface between the user equipment and a network entity.

In one embodiment, the signal reception parameter comprises at least one of received power and a received quality of the positioning signal.

In one embodiment, the position information indicates a position of the user equipment.

In one embodiment, the position information comprises an indication of a time of arrival of the positioning signal.

In one embodiment, the determining logic is operable to determine the signal reception parameter and the position information in response to a request from the network entity.

In one embodiment, the request identifies transmission nodes for which at least one of the signal reception parameter and the position information is to be determined.

In one embodiment, the request comprises at least one parameter of the positioning signal (e.g. (virtual) cell/beacon ID, PRS ID, cyclic prefix length, PRS subframe configuration, PRS subframe muting pattern, PRS bandwidth, etc.).

In one embodiment, the request is transmitted over the interface from said network entity to the user equipment.

In one embodiment, the determining logic is operable to determine the signal reception parameter of the positioning signal together with the position information from the positioning signal.

In one embodiment, the determining logic is operable to switch between determining the signal reception parameter of the positioning signal and determining the position information from the positioning signal in response to the request from the network entity.

In one embodiment, the determining logic is operable to determine the signal reception parameter of the positioning signal prior to determining the position information.

In one embodiment, the transmission logic is operable to transmit the indication of the signal reception parameter prior to determining the positioning signal.

In one embodiment, the transmission logic is operable to transmit both the indication of the signal reception parameter and the indication of the position information over the same interface between the user equipment and the network entity

In one embodiment, the transmission logic is operable to transmit at least one of the request and each the indication over a positioning protocol interface between the user equipment and the network entity.

In one embodiment, the transmission logic is operable to transmit the indication of the signal reception parameter and the indication of the position information one of together and separately.

In one embodiment, the determining logic is operable to determine the signal reception parameter for each of a first plurality of positioning signals transmitted by a corresponding first plurality of transmission nodes.

In one embodiment, the determining logic is operable to determine the signal reception parameter for each of the first plurality of positioning signals transmitted by the corresponding first plurality of transmission nodes specified by the network entity.

In one embodiment, the transmission logic is operable to transmit the indication of the signal reception parameter for each of the first plurality of positioning signals.

In one embodiment, the transmission logic is operable to transmit the indication of the signal reception parameter for each of the first plurality of positioning signals which exceed a threshold amount of signal reception parameter.

In one embodiment, the indication of the signal reception parameter comprises an indication of the transmission node.

In one embodiment, the indication of each the reception parameter comprises an indication of the corresponding transmission node.

In one embodiment, the determining logic is operable to determine the position information for each of a second plurality of positioning signals transmitted by a corresponding second plurality of transmission nodes.

In one embodiment, the first plurality and the second plurality are one of the same and different.

In one embodiment, the request includes only the identity of the transmission node.

In one embodiment, the second plurality are a subset of the first plurality.

In one embodiment, the first plurality are a subset of the second plurality.

In one embodiment, the network entity comprises a location server.

In one embodiment, the transmission node comprises at least one of a base station and a beacon.

In one embodiment, the determining logic is operable to determine the signal reception parameter of the positioning signal transmitted by transmission nodes having a beacon identifier.

According to a third aspect, there is provided a network entity method, comprising: receiving an indication of a signal reception parameter of a positioning signal transmitted by a transmission node of a wireless telecommunications network and an indication of position information determined from the positioning signal over an interface between a user equipment and the network entity.

In one embodiment, the signal reception parameter comprises at least one of received power and a received quality of the positioning signal.

In one embodiment, the position information indicates a position of the user equipment.

In one embodiment, the position information comprises an indication of a time of arrival of the positioning signal.

In one embodiment, the method comprises transmitting a request to the user equipment to determine the signal reception parameter and the position information from the positioning signal.

In one embodiment, the request comprises at least one parameter of the positioning signal (e.g. (virtual) cell/beacon ID, PRS ID, cyclic prefix length, PRS subframe configuration, PRS subframe muting pattern, PRS bandwidth, etc.).

In one embodiment, the request is transmitted over the interface from said network entity to the user equipment.

In one embodiment, the method comprises transmitting a request to the user equipment to switch between determining the signal reception parameter of the positioning signal and determining the position information from the positioning signal.

In one embodiment, the method comprises receiving the indication of the signal reception parameter prior to receiving the positioning signal.

In one embodiment, the receiving comprises receiving both the indication of the signal reception parameter and the indication of the position information over the same interface between the user equipment and the network entity

In one embodiment, at least one of the request and each the indication are transmitted over a positioning protocol interface between the user equipment and the network entity.

In one embodiment, the receiving receives the indication of the signal reception parameter and the indication of the position information one of together and separately.

In one embodiment, the request instructs the user equipment to determine the signal reception parameter for each of a first plurality of positioning signals transmitted by a corresponding first plurality of transmission nodes.

In one embodiment, the request instructs the user equipment to determine the signal reception parameter for each of the first plurality of positioning signals transmitted by the corresponding first plurality of transmission nodes specified by the request.

In one embodiment, the receiving the indication of the signal reception parameter comprises receiving the indication of the signal reception parameter for each of the first plurality of positioning signals.

In one embodiment, the receiving the indication of the signal reception parameter comprises receiving the indication of the signal reception parameter for each of the first plurality of positioning signals which exceed a threshold amount of signal reception parameter.

In one embodiment, the indication of the signal reception parameter comprises an indication of the transmission node.

In one embodiment, the indication of each the reception parameter comprises an indication of the corresponding transmission node.

In one embodiment, the request instructs the user equipment to determine the signal reception parameter for each of a second plurality of positioning signals transmitted by a corresponding second plurality of transmission nodes.

In one embodiment, the first plurality and the second plurality are one of the same and different.

In one embodiment, the request includes only the identity of the transmission node.

In one embodiment, the second plurality are a subset of the first plurality.

In one embodiment, the first plurality are a subset of the second plurality.

In one embodiment, the method comprises excluding from the second plurality those transmission nodes of the first plurality whose signal reception parameter fails to achieve a threshold amount.

In one embodiment, the method comprises adding to the second plurality additional transmission nodes not part of the first plurality.

In one embodiment, the method comprises disregarding position information for positioning signals whose signal reception parameter fails to achieve a threshold amount.

In one embodiment, the network entity comprises a location server.

In one embodiment, the transmission node comprises at least one of a base station and a beacon.

According to a fourth aspect, there is provided a network entity, comprising: reception logic operable to receive an indication of a signal reception parameter of a positioning signal transmitted by a transmission node of a wireless telecommunications network and an indication of position information determined from the positioning signal over an interface between a user equipment and the network entity.

In one embodiment, the signal reception parameter comprises at least one of received power and a received quality of the positioning signal.

In one embodiment, the position information indicates a position of the user equipment.

In one embodiment, the position information comprises an indication of a time of arrival of the positioning signal.

In one embodiment, the network entity comprises transmission logic operable to transmit a request to the user equipment to determine the signal reception parameter and the position information from the positioning signal.

In one embodiment, the request comprise at least one parameter of the positioning signal (e.g. (virtual) cell/beacon ID, PRS ID, cyclic prefix length, PRS subframe configuration, PRS subframe muting pattern, PRS bandwidth, etc.).

In one embodiment, the request is transmitted over the interface from said network entity to the user equipment.

In one embodiment, the transmission logic is operable to transmit a request to the user equipment to switch between determining the signal reception parameter of the positioning signal and determining the position information from the positioning signal.

In one embodiment, the reception logic is operable to receive the indication of the signal reception parameter prior to receiving the positioning signal.

In one embodiment, the reception logic is operable to receive both the indication of the signal reception parameter and the indication of the position information over the same interface between the user equipment and the network entity

In one embodiment, at least one of the request and each the indication are transmitted over a positioning protocol interface between the user equipment and the network entity.

In one embodiment, the reception logic is operable to receive the indication of the signal reception parameter and the indication of the position information one of together and separately.

In one embodiment, the request instructs the user equipment to determine the signal reception parameter for each of a first plurality of positioning signals transmitted by a corresponding first plurality of transmission nodes.

In one embodiment, the request instructs the user equipment to determine the signal reception parameter for each of the first plurality of positioning signals transmitted by the corresponding first plurality of transmission nodes specified by the request.

In one embodiment, the reception logic is operable to receive the indication of the signal reception parameter for each of the first plurality of positioning signals.

In one embodiment, the reception logic is operable to receive the indication of the signal reception parameter for each of the first plurality of positioning signals which exceed a threshold amount of signal reception parameter.

In one embodiment, the indication of the signal reception parameter comprises an indication of the transmission node.

In one embodiment, the indication of each the reception parameter comprises an indication of the corresponding transmission node.

In one embodiment, the request instructs the user equipment to determine the signal reception parameter for each of a second plurality of positioning signals transmitted by a corresponding second plurality of transmission nodes.

In one embodiment, the first plurality and the second plurality are one of the same and different.

In one embodiment, the request includes only the identity of the transmission node.

In one embodiment, the second plurality are a subset of the first plurality.

In one embodiment, the first plurality are a subset of the second plurality.

In one embodiment, the reception logic is operable to exclude from the second plurality those transmission nodes of the first plurality whose signal reception parameter fails to achieve a threshold amount.

In one embodiment, the transmission logic is operable to add to the second plurality additional transmission nodes not part of the first plurality.

In one embodiment, the reception logic is operable to disregard position information for positioning signals whose signal reception parameter fails to achieve a threshold amount.

In one embodiment, the network entity comprises a location server.

In one embodiment, the transmission node comprises at least one of a base station and a beacon.

According to a fifth aspect, there is provided a computer program product operable, when executed on a computer, to perform the method of the first or third aspects.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 illustrates the main steps performed by the UE and location server according to one embodiment;
Figure 2 illustrates the main steps performed by the UE and location server according to one embodiment;
Figure 3 illustrates the main steps performed by the UE and location server according to one embodiment; and
Figure 4 illustrates measurement configuration and measurement reports sent via the LPP protocol from and to the location server.

### DESCRIPTION OF THE EMBODIMENTS

Before discussing the embodiments in any more detail, first an overview will be provided. Embodiments provide a technique which enables the a user equipment to obtain information on the suitability of a positioning signal to provide an accurate indication of the position of the user equipment to a network entity. In particular, an assessment is made of how well the positioning signal is being received by the user equipment by determining a reception characteristic or parameter of that positioning signal such as, for example, the strength and/or quality of the positioning signal when received by the user equipment. It will be appreciated that if the strength and/ or quality of the positioning signal received by the user equipment is poor then the positioning information derived from that positioning signal may also be poor. Accordingly, an indication of the signal reception parameter is typically provided to a network entity which also may receive positioning information so that the network entity can take this into account when determining the location of the user equipment from the position information received. The user equipment may be given a list of transmission nodes by the network entity whose positioning signals should have their signal reception parameters measured. Alternatively, the user equipment may be configured to perform such measurements on any transmission nodes which have a beacon or other specified type of identifier. The user equipment may also be configured by the network entity to only derive position information from a subset of the list of transmission nodes. Alternatively, the user equipment may be configured by the network entity to obtain position information from positioning signals transmitted by the subset of the list of transmission nodes plus additional transmission nodes. The signalling between the user equipment and the network entity carrying the signal reception parameters, position information and any configuration messages occurs over the same interface between the user equipment and the network entity.

In one embodiment, a user equipment (UE) receives at least one measurement configuration message or request from a network entity or node via a signalling interface. That configuration message indicates a reference signal transmitted by at least one transmission point or transmission node which is to be used to measure both a signal reception parameter such as signal strength (and/or signal quality) and/or user equipment position information such as the time of arrival of that reference signal. The UE then measures both signal strength (and/or signal quality) and/or time of arrival using the same indicated reference signal for at least one transmission point. The UE then uses the same signalling interface to report the related measurement information back to the same network entity that sent the measurement configuration message. Hence, it can be seen that in this embodiment the same network entity configures measurements of both signal strength and/or quality and/or time of arrival, and both measurements are sent back to the same network entity.

The measurement report related to time of arrival can be, for example, a time difference between a reference signal (such as a position reference signal (PRS)) from a transmission point and a reference signal from a reference transmission point, and is calculated from those time of arrival measurements. The measurement report for the signal strength (and/or signal quality) can be, for example, determined using functionality in the UE already used for measuring CRS/ CSI-RS. The reports for the signal strength (and/or signal quality) and/or time of arrival for the same transmission point are not necessarily transmitted back to the network entity in the same message, but may instead be transmitted in different messages. The measured results could then be used by a location server for selection of time difference measurements, UE positioning and so on. This is particularly useful when a PRS-based beacon is used for UE positioning, because a PRS-based beacon does not have CRS and CSI-RS.

Although the following embodiments are described with reference to an LTE network, it will be appreciated that the techniques described are equally applicable in other networks.

In one embodiment, the UE performs PRS-based reference signal received power (RSRP) (and/or reference signal received quality (RSRQ)) and RSTD (reference signal time difference) measurements based on some or all of the configured PRS information, such as (virtual) cell/beacon ID, PRS ID, cyclic prefix length, PRS subframe configuration, PRS subframe muting pattern, PRS bandwidth, etc. The PRS information can be configured by the location server and, for example, transmitted on LPP (long term evolution (LTE) positioning protocol) interface between the location server and the UE. In addition, the UE reports the RSRP (and/or RSRQ) measurements to the location server on the LPP interface. The network can use the information to achieve better positioning of the UE than RSTD measurements alone.

Optionally, the UE may receive additional configurations for RSRP/ RSRQ measurement and reporting on top of PRS configurations. For example, the UE can be explicitly configured with the transmission points that require RSRP/ RSRQ measurement. Alternatively, the UE is implicitly configured to perform RSRP/RSRQ measurement of any transmission point associated with a beacon ID. A special case is that by default the UE measures and reports RSRP/RSRQ for all the configured PRSs. The network can also configure the UE to measure/report RSRP only, RSRQ only, or both RSRP and RSRQ.

Further, the network may choose the transmission point based on at least the reported RSRP/RSRQ measurements and request the UE to measure RSTD for these nodes. For example, the network may choose a few nodes that have sufficiently strong PRS signal and are sufficiently scattered around the UE geographically. This can potentially reduce the number of PRSs the UE needs to measure RSTD for and improve the positioning accuracy. Typically, RSTD measurement is more complicated than RSRP/RSRQ measurement and takes longer time to achieve satisfactory accuracy. Therefore by requesting RSRP/RSRQ measurements from a wider set of beacons, and then RSTD from only a subset of those beacons, for example, those that have the strongest RSRP/RSRQ measurements, the processing complexity for the UE may be reduced.

In some embodiments, the UE may report RSRP/RSRQ measurements together with RSTD measurements for the same or a different set of PRSs. For example, the UE may report RSRP/RSRQ measurements for a larger set of PRSs, and RSTD measurements for a smaller set or subset of PRSs. If, for any reason, the network considers that the RSTD measurements may not provide sufficient positioning accuracy, then the network can choose additional nodes based on at least the reported RSRP/RSRQ measurements and request RSTD measurements for these nodes.

The network node is typically a location server or some other network node.

### Embodiment 1 - Basic Operation

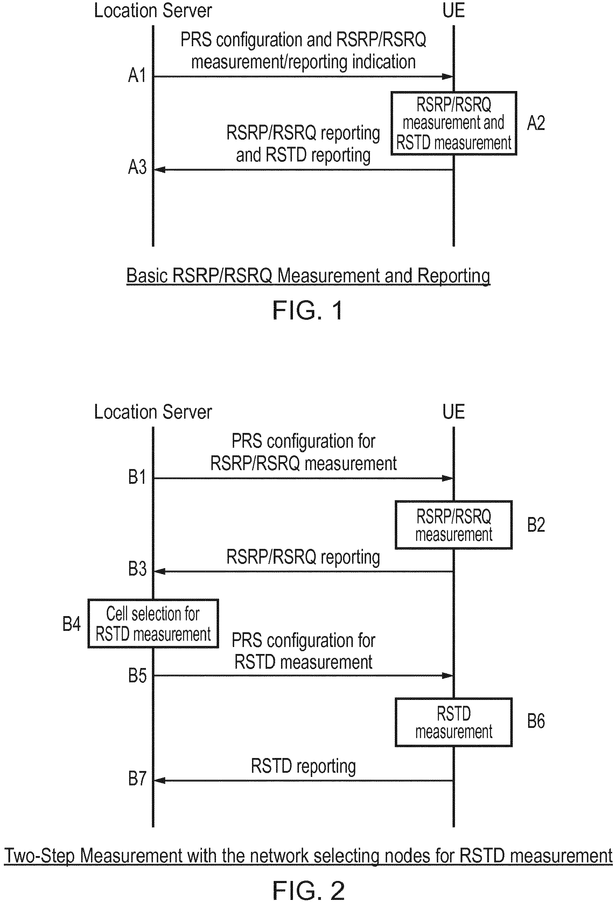

Figure 1 illustrates the main steps performed by the UE and location server according to one embodiment.

At step A1, the location server sends a configuration message to the UE to configure the UE with all the necessary PRS information, for example, a list of cell/beacon IDs and the corresponding PRS ID, cyclic prefix length, PRS subframe configuration, PRS bandwidth and/ or PRS muting pattern. The message may instruct the UE to perform the RSRP (and/or RSRQ) and RSTD measurements for those PRSs or the UE maybe preconfigured to automatically perform those measurements by default.

At step A2, the UE measures RSRP (and/or RSRQ) and RSTD based on configured PRS information and RSRP/RSRQ measurement/reporting indication.

At step A3, the UE reports RSRP (and/or RSRQ) and RSTD based on configured PRS information and RSRP/RSRQ measurement/reporting indication. The UE may report RSRP/RSRQ for a PRS only if it is above a threshold amount (which may also be specified within the configuration message or the UE may be preconfigured with the threshold amount(s)).

The RSRP/RSRQ measurement/reporting indication can be explicit RSRP/RSRQ measurement/reporting indication which provides an indication of these values, or can be implicit RSRP measurement/reporting indicating if a node is associated with a beacon ID has sufficient power, or implicit RSRP/RSRQ measurement/reporting indication if a node is associated with a beacon ID has sufficient power and/or quality, etc.

### Embodiment 2 - Two-Step Operation

Figure 2 illustrates the main steps performed by the UE and location server according to one embodiment. In this embodiment, the UE performs a two-step RSRP/ RSRQ/ RSTD Measurement/ Reporting.

At step B1, the location server sends RSRP/RSRQ measurement message with PRS configuration information to the UE, for example, a list of cell/beacon IDs and the corresponding PRS ID, cyclic prefix length, PRS subframe configuration, PRS bandwidth and/ or PRS muting pattern. The message may instruct the UE to perform the RSRP and/ or RSRQ measurements for those PRSs or the UE may be preconfigured to automatically perform those measurements by default.

At step B2, the UE measures RSRP/ RSRQ information according to the received PRS information from location server.

At step B3, the UE reports measured RSRP/RSRQ information to the location server. The UE may report a set of RSRP/RSRQ measurements that are above a certain threshold (e.g. configured by the network or location server). The RSRP/RSRQ measurement/reporting indication can be explicit or implicit as mentioned above.

At step B4, the location server selects the transmission nodes or cells for RSTD measurement by this UE based on collected RSRP/ RSRQ information and geographical information of the cells. This helps to ensure that only those PRSs which are received with sufficient power and/or quality are used for positioning.

At step B5, the location server sends the PRS configuration for RSTD measurement to the UE. If the PRS configuration information with same beacon ID has already been sent to the UE for the RSRP/RSRQ measurements in Step 1, then this PRS configuration information could be indicated by a beacon ID and/or PRS ID corresponding to this beacon to avoid this PRS configuration information needing to be retransmitted.

At step B6, the UE measures the RSTD information according to the received PRS configuration information at step B5.

At step B7, the UE reports the RSTD information measured at step B6 to the location server.

### Embodiment 3 - Multi-Step Operation

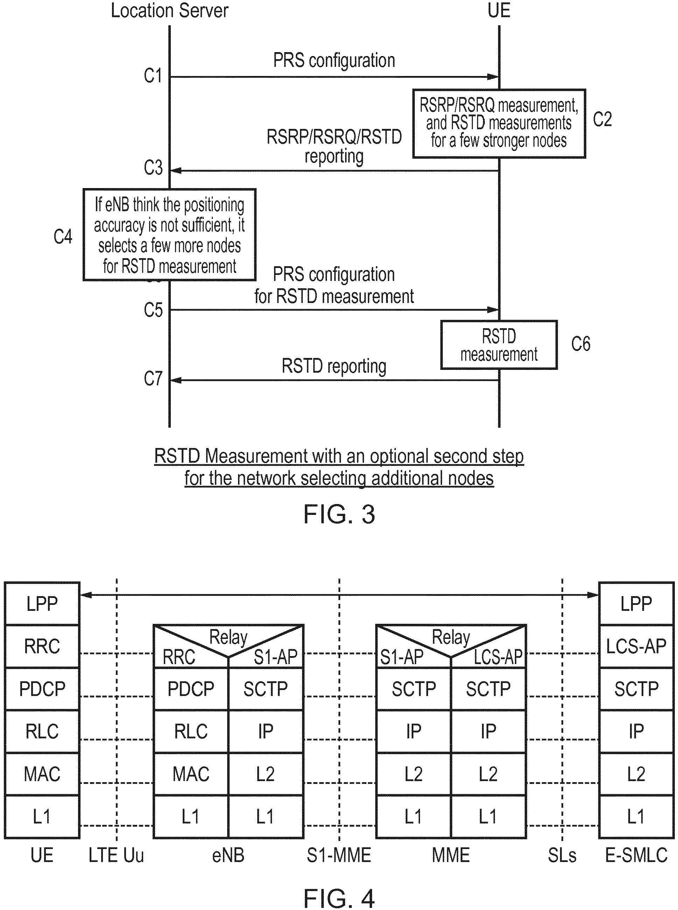

Figure 3 illustrates the main steps performed by the UE and location server according to one embodiment. In this embodiment, the UE reports the RSTD measurements for a first set of cells and the RSRP/RSRQ measurements for a second, larger set of cells.

At step C1, the location server sends PRS configuration and RSRP/RSRQ configuration to the UE, as mentioned above.

At step C2, the UE performs the RSRP/RSRQ measurements for those PRSs, as mentioned above. The UE selects a number of those nodes having stronger PRS signals based on the RSRP/RSRQ measurements and then performs the RSTD measurements for those selected nodes.

At step C3, the UE reports the RSTD measurements for those selected nodes, and RSRP/RSRQ measurements for a larger set of nodes.

At step C4, after receiving the report from the UE, the location server considers that the accuracy may not be sufficiently good, and so it selects a number of additional nodes for RSTD measurements.

At step C5, the location server signals these additional nodes to the UE.

At step C6, the UE performs the RSTD measurements for those additional nodes.

At step C7, the UE reports the RSTD measurements to the location server or other network node.

In embodiments, the measurement configuration and measurement reports are sent via the LPP protocol from and to a location server, as shown in Figure 4.

Thus the configuration and reporting messages for both kinds of measurement originate and terminate respectively with the same network entity, passing transparently through the eNB or other network nodes.

Accordingly, embodiments support RSRP/RSRQ measurement/reporting for a PRS-based beacon. The measured information can be used for enhanced cell identifier (E-CID) positioning, cell selection of observed time difference of arrival (OTDOA), Hybrid E-CID/OTDOA techniques, and so on.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices maybe, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory

(ROM) for storing software, random access memory (RAM), and non-volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A user equipment method, comprising:
determining a signal reception parameter of a positioning signal transmitted by a transmission node of a wireless telecommunications network and position information from said positioning signal; and
transmitting an indication of said signal reception parameter and an indication of said position information over an interface between said user equipment and a network entity.

2. The method of claim 1, wherein said determining occurs in response to a request from said network entity.

3. The method of claim 2, wherein said request is transmitted over said interface from said network node to said user equipment.

4. The method of claim 2 or 3, comprising switching between determining said signal reception parameter of said positioning signal and determining said position information from said positioning signal in response to said request from said network entity.

5. The method of any preceding claim, wherein said transmitting comprises transmitting both said indication of said signal reception parameter and said indication of said position information over the same interface between said user equipment and said network entity.

6. The method of any one of claims 2 to 5, wherein at least one of said request and each said indication are transmitted over a positioning protocol interface between said user equipment and said network entity.

7. The method of any preceding claim, wherein said determining said signal reception parameter comprises determining said signal reception parameter for each of a first plurality of positioning signals transmitted by a corresponding first plurality of transmission nodes specified by said network entity.

8. The method of claim 7, wherein said transmitting said indication of said signal reception parameter comprises transmitting said indication of said signal reception parameter for each of said first plurality of positioning signals.

9. The method of claim 7 or 8, wherein said transmitting said indication of said signal reception parameter comprises transmitting said indication of said signal reception parameter for each of said first plurality of positioning signals which exceed a threshold amount of signal reception parameter.

10. The method of any preceding claim, wherein said indication of said signal reception parameter comprises an indication of said transmission node.

11. The method of any preceding claim, wherein said determining said position information comprises determining said position information for each of a second plurality of positioning signals transmitted by a corresponding second plurality of transmission nodes.

12. A user equipment, comprising:
determining logic operable to determine a signal reception parameter of a positioning signal transmitted by a transmission node of a wireless telecommunications network and position information from said positioning signal; and
transmission logic operable to transmit an indication of said signal reception parameter and an indication of said position information over an interface between said user equipment and a network entity.

13. A network entity method, comprising:
receiving an indication of a signal reception parameter of a positioning signal transmitted by a transmission node of a wireless telecommunications network and an indication of position information determined from said positioning signal over an interface between a user equipment and said network entity.

14. A network entity, comprising:
reception logic operable to receive an indication of a signal reception parameter of a positioning signal transmitted by a transmission node of a wireless telecommunications network and an indication of position information determined from said positioning signal over an interface between a user equipment and said network entity.

15. A computer program product operable, when executed on a computer to perform the method of any one of claims 1 to 11 and 13.
